Europäisches Patentamt

European Patent Office  (11) Veröffentlichungsnummer: **0 092 770**

Office européen des brevets  **B1**

(19)

(12) **EUROPÄISCHE PATENTSCHRIFT**

(45) Veröffentlichungstag der Patentschrift :
01.10.86

(21) Anmeldenummer : 83103777.5

(22) Anmeldetag : 19.04.83

(51) Int. Cl.⁴ : **F 25 J  3/08, C 01 B 31/18**

(54) Verfahren zur Gewinnung von Kohlenmonoxid.

(30) Priorität : 28.04.82 DE 3215829

(43) Veröffentlichungstag der Anmeldung :
02.11.83 Patentblatt 83/44

(45) Bekanntmachung des Hinweises auf die Patenterteilung : 01.10.86 Patentblatt 86/40

(84) Benannte Vertragsstaaten :
**BE DE FR GB NL**

(56) Entgegenhaltungen :
**FR-A- 2 353 819**
**US-A- 3 813 889**
**US-A- 3 886 756**
**CHEMICAL ABSTRACTS, Band 89, Nr. 20, 13. Novem-**
**ber 1978, Seite 115, Nr. 165545g, Columbus, Ohio, US;**
**& JP - A - 78 25 294 (HITACHI, LTD.) 08.03.1978**

(73) Patentinhaber : **Linde Aktiengesellschaft**
**Abraham-Lincoln-Strasse 21**
**D-6200 Wiesbaden (DE)**

(72) Erfinder : **Fabian, Rainer, Dipl.-Ing.**
**Alpspitzweg 5**
**D-8192 Geretsried (DE)**

(74) Vertreter : **Schaefer, Gerhard, Dr.**
**Linde Aktiengesellschaft Zentrale Patentabteilung**
**D-8023 Höllriegelskreuth (DE)**

EP 0 092 770 B1

Jouve, 18, rue St-Denis, 75001 Paris, France

## Beschreibung

Die Erfindung betrifft ein Verfahren zur Gewinnung' von Kohlenmonoxid aus einem mit Stickstoff verunreinigten, im wesentlichen Wasserstoff, Kohlenmonoxid und Methan enthaltenden Gasstrom, wobei der Gasstrom bei tiefer Temperatur unter Gewinnung einer mit Stickstoff verunreinigten Kohlenmonoxidfraktion zerlegt wird, wobei ein Teil des Kohlenmonoxids zur Deckung des Kältebedarfs des Verfahrens im Kreislauf geführt und der verbleibende Teil als Produkt abgezogen wird.

Kohlenmonoxid wird üblicherweise durch katalytische Spaltung von Erdgas oder durch partielle Vergasung von Kohle oder Schweröl erzeugt. Das durch diese Prozesse gewonnene Synthesegas wird durch Tieftemperaturzerlegung von den Begleitgasen, im wesentlichen Wasserstoff und Methan, getrennt. Wenn im verwendeten Einsatzmaterial erhebliche Mengen Stickstoff enthalten sind, behindert der ins Synthesegas gelangende Stickstoff die Tieftemperaturzerlegung. So ist beispielsweise bei der Synthesegaserzeugung durch Dampfreformierung von Erdgas der Stickstoffgehalt des Erdgases störend, wenn er über etwa 2 % liegt.

Höhere Stickstoffgehalte treten insbesondere bei der Verwendung von gasförmigen Einsätzen, also beispielsweise von Erdgas oder stickstoffhaltigen Raffineriegasen, auf. Zur Lösung der durch den Stickstoff entstehenden Probleme sind verschiedene Möglichkeiten bekannt : Zunächst kann man in bestimmten Fällen statt der Spaltung eines stickstoffhaltigen gasförmigen Einsatzes einen Öl- oder Kohlevergasungsprozeß einsetzen, bei denen in der Regel geringere Stickstoffgehalte vorliegen. Abgesehen davon, daß man bei dieser Verfahrensführung auf einen anderen Einsatzstoff übergehen muß, weist es den Nachteil auf, daß es nicht unbedingt das kostengünstigste Verfahren ist. So sind Vergasungsprozesse bei Anlagen mit einer Kohlenmonoxidproduktion von weniger als etwa 5 000 Nm³/h in der Regel zu aufwendig. Eine weitere Möglichkeit besteht darin, den Stickstoffgehalt, solange er sich noch innerhalb vertretbarer Grenzen bewegt, einfach im Kohlenmonoxid in Kauf zu nehmen (US-A 3 886 756). Diese an sich einfache Verfahrensführung hat jedoch den entscheidenden Nachteil, daß die Prozeßführung des kohlenmonoxidverarbeitenden Verfahrensschrittes schwierig und aufwendig wird. Eine weitere Möglichkeit besteht darin, den gasförmigen Einsatz vor der Spaltung einer Stickstoffabtrennung zu unterziehen. Diese Lösung erfordert jedoch eine zweite Tieftemperaturzerlegung vor der Spaltung mit den entsprechenden erforderlichen Vorreinigungsschritten. Das Verfahren ist deshalb mit erheblichem zusätzlichem Aufwand verbunden. Schließlich ist es noch möglich, das Kohlenmonoxid aus dem Gasstrom statt durch Tieftemperaturzerlegung durch Waschverfahren zu gewinnen. Die hierfür bekannten Verfahren sind jedoch schwierig zu betreiben, da die Waschflüssigkeiten giftig und aggressiv sind und weil die Verfahren aufwendige Hilfsanlagen, insbesondere zur Nachreinigung, erfordern.

Ein Verfahren zur Herstellung von Kohlenmonoxid aus stickstoffhaltigem Erdgas, bei dem der Stickstoff vor der Spaltung des Erdgases abgetrennt wird, ist bekannt aus Linde-Berichte aus Technik und Wissenschaft, Heft 33, 1973, Seiten 3-5.

Der Erfindung liegt die Aufgabe zugrunde, ein Verfahren der eingangs genannten Art zu entwickeln, das die Gewinnung von stickstofffreiem Kohlenmonoxid auf möglichst einfache Weise ermöglicht.

Diese Aufgabe wird dadurch gelöst, daß mit Stickstoff verunreinigtes Kohlenmonoxid durch Rektifikation in Kohlenmonoxid und in eine kohlenmonoxidhaltige Stickstoff-Fraktion zerlegt wird, wobei der Sumpf einer Rektifiziersäule durch im Kreislauf geführtes Kohlenmonoxid beheizt und das im Sumpf dieser Rektifiziersäule flüssig anfallende Kohlenmonoxid nach Entspannung zur Kühlung des Kopfes der Rektifiziersäule verwendet wird.

Erfindungsgemäß wird damit eine Stickstoff-Kohlenmonoxid-Zerlegung durch Rektifikation vorgeschlagen. Eine derartige Zerlegung gilt eigentlich infolge des sehr ähnlichen Siedeverhaltens beider Komponenten als unwirtschaftlich, da die Trennung nur mit großem Aufwand zu verwirklichen ist. Es hat sich jedoch überraschenderweise herausgestellt, daß die rektifikatorische Abtrennung des Stickstoffs auf relativ einfache Weise möglich ist, wenn man einen ohnehin vorgesehenen Kohlenmonoxidkreislauf nicht nur für den Kältebedarf der eigentlichen Gaszerlegung, sondern darüber hinaus auch noch für die erfindungsgemäße Stickstoff-Kohlenmonoxid-Trennung nutzt.

Das erfindungsgemäße Verfahren eignet sich in Verbindung mit vielen Gaszerlegungsverfahren, beispielsweise in Verbindung mit einer Fraktionierung durch partielle Kondensation oder mit einer Methanwäsche.

Methanwäschen werden üblicherweise bei erhöhtem Druck, beispielsweise im Bereich zwischen 10 und 70 bar, gegebenenfalls auch bei noch niedrigeren oder noch höheren Drücken, durchgeführt. Die Waschtemperatur liegt dabei in der Nähe des Schmelzpunkts von Methan, also knapp über 90,6 K. Die Waschtemperatur wird möglichst niedrig gewählt, um diese Verfahrensstufe mit möglichst niedriger Waschmittelmenge betreiben und daraus einen möglichst reinen Wasserstoffstrom abziehen zu können. Der Wasserstoff enthält üblicherweise nur noch geringe Mengen an Methan (Größenordnung 1-2 Mol-%), was auf den Methan-Dampfdruck in der Waschsäule zurückzuführen ist. Die aus dem Sumpf der Waschsäule abgezogene Flüssigkeit enthält neben dem als Waschflüssigkeit verwendeten Methan den Stickstoff, das Kohlenmonoxid und das im Rohgas enthaltene Methan. Die Regenerierung des Waschmethans erfolgt üblicherweise bei reduziertem Druck, insbesondere bei Drücken zwischen etwa 2 und 3 bar, beispielsweise bei 2,5 bar. Die Entspannung áuf den Regenerierdruck wird häufig zweistufig durchgeführt, um bei einer ersten Entspannungsstufe entgasende Komponenten, die zu einem Großteil aus gelöstem Wasserstoff bestehen, abzutrennen und auf diese Weise vom Kohlenmonoxid-Produkt fernzuhalten.

Das am Kopf der Regeneriersäule abgezogene Kohlenmonoxid, das auch den im Rohgas enthaltenen Stickstoff enthält, wird beim erfindungsgemäßen Verfahren unter dem Druck der Regeneriersäule in die Stickstoff-Kohlenmonoxid-Rektifiziersäule geführt. Diese Säule arbeitet deshalb vorzugsweise in einem Druckbereich zwischen 2 und 3 bar, beispielsweise bei 2,5 bar. Unter diesem Druck steht auch im Kreislauf geführtes Kohlenmonoxid mit Taupunktstemperatur, das bisher unmittelbar wieder erwärmt und zum Kreislaufkompressor geführt wurde, zur Verfügung. Es wird als Heizmedium in den Sumpf der Rektifiziersäule geführt, wozu es vorzugsweise direkt als Gas in den Sumpf eingespeist wird. Geeignete Sumpftemperaturen liegen im Bereich zwischen 87 und 93 K, beispielsweise bei 91 K. Das aus dem Sumpf abgezogene reine Kohlenmonoxid wird entspannt und einem Kopfkondensator als Kühlmittel zugeführt. Für die Entspannung steht in der Regel nur ein Druckgefälle zwischen etwa 1 und 2 bar zur Verfügung, da das entspannte Kohlenmonoxid nach seiner Erwärmung bis auf Umgebungstemperatur in der Regel noch bei einem leicht über Atmosphärendruck liegenden Druck der Saugseite eines Kompressors zugeführt werden soll. Die Verwendung eines Kompressors mit unteratmosphärischem Ansaugdruck würde zwar die verfügbare Druckdifferenz bei der Entspannung des flüssigen Kohlenmonoxids vergrößern, erfordert jedoch eine relativ aufwendige Sicherung des Kompressors. Die bei der Entspannung verfügbare Druckdifferenz gestattet es, das flüssige Kohlenmonoxid ohne Verwendung einer Pumpe um eine bestimmte Höhe anzuheben. Diese aus eigener Kraft zu überwindende Höhendifferenz beträgt beispielsweise bei einer Entspannung um 1 bar etwa 12 m. Hieraus läßt sich im Einzelfall die maximale Bauhöhe der Rektifiziersäule ermitteln, sofern keine zusätzliche Pumpe eingesetzt werden soll.

Am Kopf der Rektifiziersäule wird durch Kühlung mittels der entspannten Sumpffraktion eine Temperatur im Bereich zwischen 80 und 87 K aufrechterhalten. Sofern die Menge des entspannten Sumpfprodukts nicht zur Kopfkühlung ausreicht, kann zusätzliches flüssiges Kohlenmonoxid, beispielsweise aus einem im Kreislauf vorgesehenen Lagertank, auf den gleichen Druck wie das Sumpfprodukt entspannt und diesem zugemischt werden. Vom Kopf der Säule wird eine stickstoffreiche Fraktion abgezogen, die noch mit Kohlenmonoxid verunreinigt ist. Diese Fraktion kann beispielsweise als Heizgas verwendet werden. Als günstig hat es sich erwiesen, die Rektifikationsbedingungen so aufeinander abzustimmen, daß am Kopf der Rektifiziersäule eine Stickstoff-Fraktion abgezogen wird, die mit etwa 35 Mol-% Kohlenmonoxid verunreinigt ist.

Die Stickstoffmengen, die beim erfindungsgemäßen Verfahren aus dem Kohlenmonoxid abgetrennt werden können, hängen im einzelnen von den Randbedingungen des Verfahrens ab und lassen sich in üblicher Weise hieraus berechnen. Wenn die Methanwäsche beispielsweise unter einem Druck von 14 bar durchgeführt wird und die Kälteerzeugung außer dem Kohlenmonoxid-Kreislauf noch durch eine arbeitsleistende Entspannung von Wasserstoff unterstützt wird, sind Stickstoffmengen von etwa 9 Mol-% im Kopfprodukt der Regeneriersäule abtrennbar. Dies entspricht etwa der gleichen Stickstoffmenge in einem zu reformierenden Erdgas. Bei Verwendung einer Turbinenentspannung von Kohlenmonoxid können noch höhere Stickstoffgehalte zugelassen werden.

In einer günstigen Ausgestaltung des erfindungsgemäßen Verfahrens wird die zur Regenerierung des Waschmittels verwendete Kohlenmonoxid-Methan-Trennsäule am Kopf durch indirekten Wärmetausch mit flüssigem Kreislauf-Kohlenmonoxid gekühlt. Diese Verfahrensführung weicht insofern von der üblichen Regeneriermethode ab, als die Kopfkühlung indirekt mit Kohlenmonoxid erfolgt, während üblicherweise flüssiges Kohlenmonoxid direkt auf den Säulenkopf aufgegeben wird. Die indirekte Kühlung ist im Rahmen der vorliegenden Erfindung jedoch günstiger, da die Zugabe von flüssigem Kohlenmonoxid einerseits die der Rektifiziersäule zuzuführende Gasmenge vergrößern und andererseits den Stickstoffgehalt in dieser Gasmenge verdünnen würde.

In einer weiteren Ausgestaltung des erfindungsgemäßen Verfahrens wird die im Rahmen einer zweistufigen Entspannung des beladenen Waschmittels vorgesehene Abtrennung von ausgasenden Bestandteilen in einer Trennsäule vorgenommen. Gegenüber der Verwendung eines einfachen Abscheiders bietet die Installation schon einer relativ kleinen Trennsäule den Vorteil, daß der Wasserstoff aus der Flüssigkeit wesentlich besser abgetrennt werden kann und deshalb die Stickstoff-Kohlenmonoxid-Säule nicht mehr belastet (Taupunktserniedrigung am Kopf). Die Trennsäule wird im Sumpf mit Waschmethan und/oder mit im Kreislauf geführtem Kohlenmonoxid beheizt und am Kopf mit flüssigem Kohlenmonoxid, das dem Kreislauf entnommen wird, gekühlt, wodurch die Kohlenmonoxid-Verluste verringert werden.

Weitere Einzelheiten des erfindungsgemäßen Verfahrens werden nachfolgend anhand zweier in den Figuren schematisch dargestellter Ausführungsbeispiele erläutert.

Es zeigen:

Figur 1 das erfindungsgemäße Verfahren in Verbindung mit einer Methanwäsche, und

Figur 2 das erfindungsgemäße Verfahren in Verbindung mit einer partiellen Kondensation.

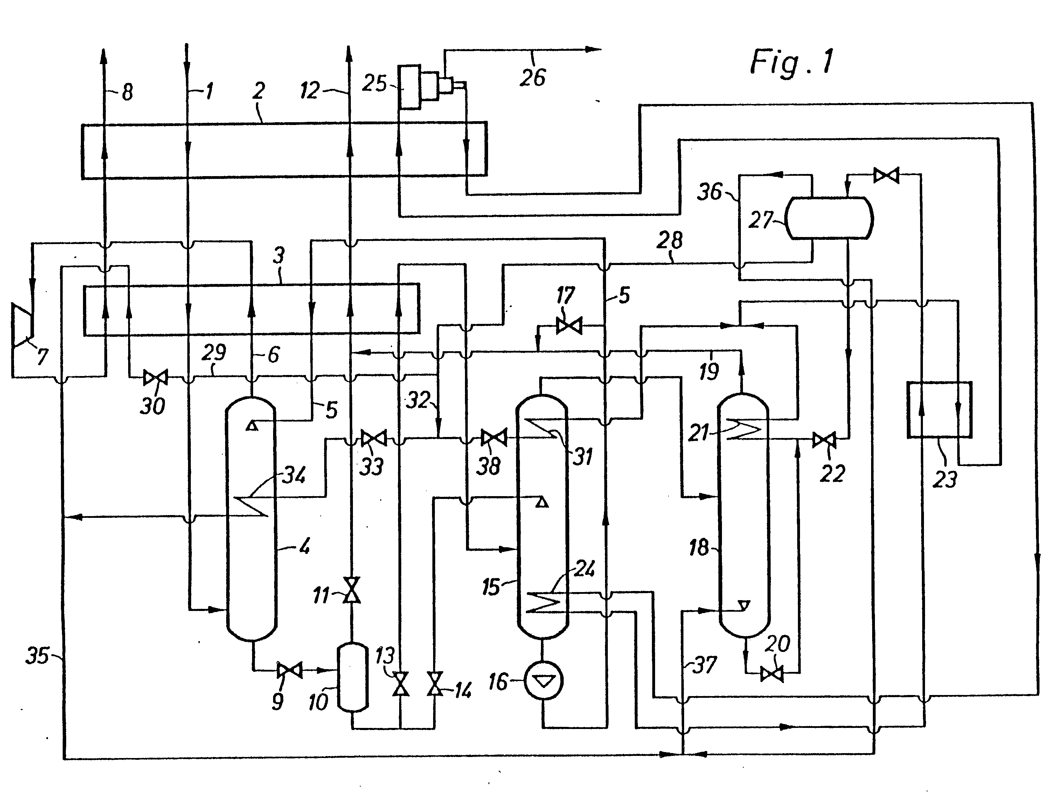

Bei dem in der Figur 1 dargestellten Ausführungsbeispiel wird über Leitung 1 ein durch Dampfreformierung von Erdgas erzeugtes Spaltgas herangeführt, das 70,54 Mol-% Wasserstoff, 24,69 Mol-% Kohlenmonoxid, 3,49 Mol-% Methan und 1,28 Mol-% Stickstoff enthält. Das Spaltgas wurde durch Reformierung eines Erdgases mit einem Stickstoffgehalt von 5 Mol-% erzeugt. Generell lassen sich beim erfindungsgemässen Verfahren Erdgase mit einem Stickstoffgehalt bis zu etwa 15 Mol-% Stickstoff verwenden. Stehen Einsatzgase mit noch höherem Stickstoffgehalt zur Verfügung, dann ist eine Stickstoffabtrennung vor der Dampfreformierung wirtschaftlich günstiger als das erfindungsgemäße Verfahren.

Das Einsatzgas wird über Leitung 1 bei einem Druck von 14 bar und einer Temperatur von 36 °C zugeführt. In den Wärmetauschern 2 und 3 wird das Gas gegen kalte Zerlegungsprodukte auf 92 K abgekühlt, wobei im Spaltgas enthaltenes Methan und Kohlenmonoxid weitgehend kondensieren. Das zweiphasige Gemisch wird in den unteren Bereich der Methan-Waschsäule 4 eingespeist. Aus dem verbliebenen Gas wird in der Waschsäule 4 Kohlenmonoxid mit flüssigem Methan, das über Leitung 5 in den oberen Bereich der Waschsäule 4 eingeführt wird, ausgewaschen. Am Kopf der Waschsäule wird über Leitung 6 gereinigter Wasserstoff abgezogen, der lediglich etwa 1,5 Mol-% Methan, 0,2 Mol-% Stickstoff und 10 ppm Kohlenmonoxid enthält. Diese Wasserstoff-Fraktion wird im Wärmetauscher 3 angewärmt, anschließend in der Turbine 7 kälteleistend entspannt und nach erneuter Anwärmung in den Wärmetauschern 3 und 2 über Leitung 8 als Produktwasserstoff abgegeben.

Das Waschmethan mit dem gesamten Kohlenmonoxid, dem überwiegenden Teil des Stickstoffs und etwa gelöstem Wasserstoff wird aus dem Sumpf der Waschsäule 4 abgezogen und im Ventil 9 auf einen Druck von etwa 4 bar entspannt. Dabei entgast im Waschmethan gelöster Wasserstoff sowie entsprechend den Gleichgewichtsbedingungen auch Kohlenmonoxid, Stickstoff und Methan. Die ausgegasten Bestandteile, die ungefähr in gleichen Mengen Wasserstoff und Kohlenmonoxid enthalten, werden im Abscheider 10 abgetrennt, im Ventil 11 entspannt und nach Anwärmung in den Wärmetauschern 3 und 2 über Leitung 12 als Heizgasfraktion abgezogen.

In einer anderen Ausführung der Erfindung wird der Abscheider 10 durch eine kleine Rektifiziersäule, deren Kopf mit Kreislauf-Kohlenmonoxid unter einem Druck von 1,5 bar und bei einer Temperatur von 86 K gekühlt wird, ersetzt. Dadurch wird der Kohlenmonoxid-Anteil in dieser Heizgasfraktion auf weniger als 40 Mol-% reduziert.

Die im Abscheider 10 bzw. in der entsprechenden Rektifiziersäule anfallende Flüssigkeit wird in zwei Teilströme aufgeteilt und in den Ventilen 13 und 14 auf 2,5 bar entspannt. Der im Ventil 13 entspannte Teilstrom verdampft im Wärmetauscher 3 und wird danach der Regeneriersäule 15 aufgegeben. Der im Ventil 14 entspannte Teilstrom wird einige Böden oberhalb des anderen Stroms direkt in die Regeneriersäule 15 eingespeist. Die Regeneriersäule 15 enthält einen Kopfkondensator 31 sowie eine Sumpfheizung 24, die beide mit im Kreislauf geführtem Kohlenmonoxid betrieben werden. Im Sumpf der Säule 15 fällt reines Methan an, das in der Pumpe 16 auf Rohgasdruck gebracht wird. Über Leitung 5 wird das als Waschmittel für die Methanwäsche benötigte Methan abgezweigt, im Wärmetauscher 3 unterkühlt und wieder in die Waschsäule 4 eingespeist. Das überschüssige Methan wird im Ventil 17 entspannt und der aus dem Abscheider 10 abgezogenen Heizgasfraktion zugemischt. Das Kopfprodukt der Regeneriersäule 15 ist eine Mischung aus 95,05 Mol-% Kohlenmonoxid, 4,8 Mol-% Stickstoff, 0,1 Mol-% Methan und 0,05 Mol-% Wasserstoff. Dieses Gas wird in den mittleren Bereich der Rektifiziersäule 18, die ebenfalls unter einem Druck von 2,5 bar (unter Vernachlässigung der Druckabfälle) betrieben wird, eingespeist. Am Kopf dieser Rektifiziersäule wird über Leitung 19 Stickstoff, das den verbleibenden Wasserstoff und etwa 35 Mol-% Kohlenmonoxid enthält, abgezogen und der Heizgasfraktion zugemischt. Im Sumpf der Rektifiziersäule 18 wird reines Kohlenmonoxid abgezogen, im Ventil 20 auf 1,5 bar entspannt, wobei die Temperatur von 90,5 auf 85 K absinkt, und im Kondensator 21 im Kopf der Säule 18 verdampft. Über Ventil 22 wird eine kleine Menge flüssiges Kohlenmonoxid zur Deckung der Kälteverluste der Stickstoff-Kohlenmonoxid-Trennung zugespeist.

Das aus dem Sumpf der Rektifiziersäule 18 abgezogene Kohlenmonoxid, das sowohl Produkt- als auch Kreislauf-Kohlenmonoxid enthält, wird nach seiner Verdampfung im Kondensator 21 im Wärmetauscher 23 gegen sich unterkühlendes flüssiges Kohlenmonoxid und anschließend im Wärmetauscher 2 angewärmt. Das Kohlenmonoxid wird mit einem Druck von 1,1 bar einem Kompressor 25 zugeführt, dem über Leitung 26 Kohlenmonoxid-Produkt bei einer geeigneten Druckstufe entnommen wird. Im Kreislauf zu führendes Kohlenmonoxid wird nach Verdichtung auf 30 bar im Wärmetauscher 2 abgekühlt, in der Sumpfheizung 24 der Regeneriersäule 15 kondensiert, dann im Wärmetauscher 23 gegen anzuwärmendes Kohlenmonoxid unterkühlt und in das Kohlenmonoxid-Vorratsgefäß 27 auf 2,5 bar entspannt. Mit diesem flüssigen Kohlenmonoxid werden die einzelnen Kühlstufen versorgt. Über die Leitungen 28 und 29 sowie Ventil 30 gelangt ein Teilstrom in den Wärmetauscher 3 und wird dort verdampft während ein anderer Teilstrom über die Leitungen 28 und 32 sowie das Ventil 33 zum Waschsäulenkühler 34 gelangt. Nach Verdampfung in den Wärmetauschern 3 und 34 werden die beiden Kohlenmonoxid-Teilströme wieder vereinigt und über Leitung 35 bei einem Druck von 2,5 bar abgeführt. Dieses Gas wird mit Entspannungsgas aus dem Abscheider 27, das über Leitung 36 abgezogen wird, vermischt und über Leitung 37 als Heizdampf in den Sumpf der Rektifiziersäule 18 eingeführt.

Ein weiterer Teilstrom des über Leitung 28 aus dem Behälter 26 abgezogenen flüssigen Kohlenmonoxids wird schließlich im Ventil 38 auf einen Druck von 1,5 bar entspannt und als Kühlmittel im Wärmetauscher 31 am Kopf der Regeneriersäule 15 verwendet. Das verdampfte Kohlenmonoxid wird anschließend mit dem im Kondensator 21 der Rektifiziersäule verdampften Produkt- und Kreislaufmethan vermischt und nach Anwärmung erneut dem Kohlenmonoxid-Verdichter 25 zugeführt.

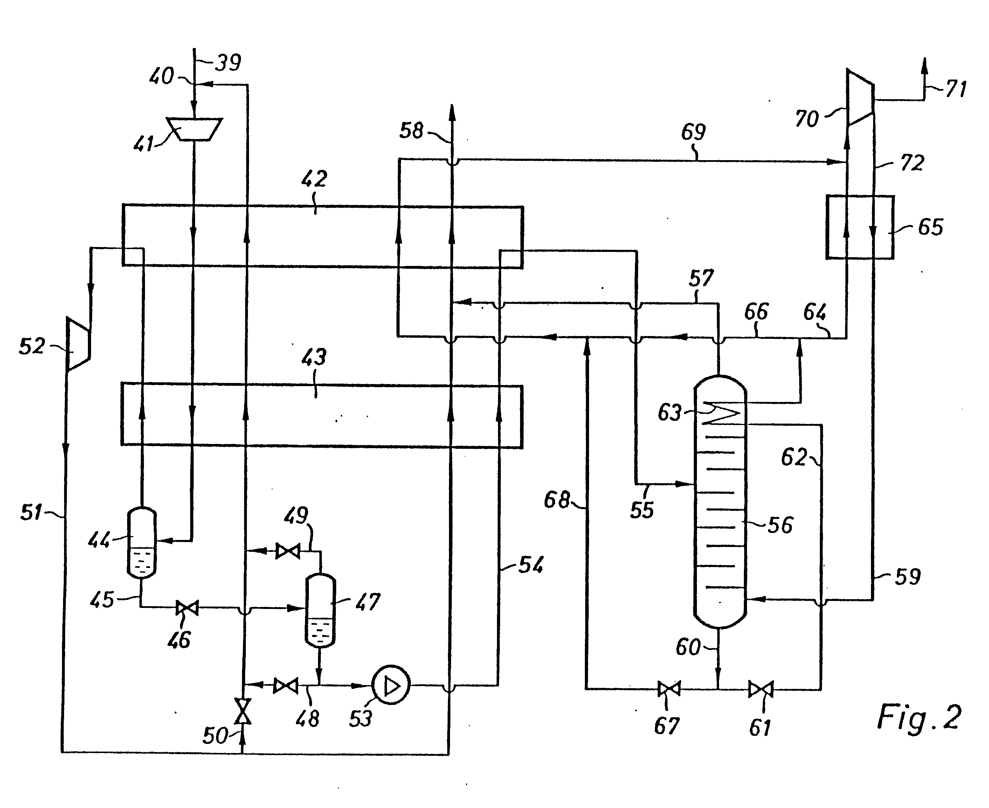

Das in der Figur 2 dargestellte Verfahren eignet sich insbesondere für die Aufarbeitung von Gasgemischen mit geringem Methangehalt, da keine Methanabtrennung vorgesehen ist.

Über Leitung 39 wird ein kohlenmonoxidreiches Gas, das 29,7 Mol-% Wasserstoff, 4,2 Mol-% Stickstoff, 0,1 Mol-% Methan und 66 Mol-% Kohlenmonoxid enthält, herangeführt. Das Gas wird bei 40 mit einem offenen, im wesentlich Wasserstoff und Kohlenmonoxid enthaltenden Gemisch-Kältekreislauf vermengt und im Kompressor 41 verdichtet. In den Wärmetauschern 42 und 43 wird das Gas auf etwa 78 K abgekühlt, wobei sich ein kohlenmonoxidreiches Kondensat bildet, das im Abscheider 44 abgetrennt wird. Zur Ausgasung von gelöstem Wasserstoff wird das über Leitung 45 aus dem Abscheider 44 abgezogene Kondensat bei 46 auf etwa 1,5 bar entspannt und dann in einen weiteren Abscheider 47 geleitet.

Die Flüssigphase aus dem Abscheider 47 besteht aus dem Kohlenmonoxid-Stickstoff-Gemisch. Ein Teilstrom dieser Flüssigkeit wird über Leitung 48 abgezogen und in den offenen Kältekreislauf eingespeist. Der Kreislauf wird außerdem noch über Leitung 49 mit Entspannungsgas aus dem Abscheider 47 sowie mit einem Teilstrom 50 des Abstroms 51 einer Expansionsturbine 52, in der die wasserstoffreie Gasphase aus dem Abscheider 44 nach deren Erwärmung in den Wärmetauschern 43 und 42 kälteleistend entspannt wird, gespeist. Das aus den Leitungen 48, 49 und 50 gebildete Gemisch stellt ein bei sehr tiefer Temperatur vorliegendes Kältemittel dar, das in den Wärmetauschern 43 und 42 gegen abzukühlende Verfahrensströme angewärmt und schließlich bei 40 mit dem Rohgas vermischt wird.

Der Hauptstrom aus dem Abscheider 47 wird bei 53 auf einen Druck von etwa 2,6 bar gepumpt, über Leitung 54 zum Wärmetauscher 43 geführt und angewärmt, dann im Wärmetauscher 42 teilverdampft und über Leitung 55 in die Stickstoff-Abtrennsäule 56 entspannt. Das Kopfprodukt der Säule 56 ist die Stickstoff-Fraktion, die über Leitung 57 abgezogen und in eine Restgasleitung 58, die auch den überschüssigen Teil des Turbinenabstroms 51 aufnimmt, eingespeist wird. Die Säule 56 wird durch Einblasen eines kalten Kohlenmonoxidstroms über Leitung 59 beheizt. Dieser Strom verläßt die Säule 56 mit dem Kohlenmonoxid-Produktstrom in flüssiger Form durch Leitung 60. Ein Teil dieses Sumpfprodukts wird im Ventil 61 auf 1,5 bar entspannt, mittels Leitung 62 zum Kopfkondensator 63 der Säule 56 geführt und dort verdampft. Das verdampfte Niederdruck-Kohlenmonoxid wird über Leitung 64 zum Wärmetauscher 65 geführt und gegen Kreislauf-Kohlenmonoxid angewärmt. Ein Teilstrom des verdampften Kohlenmonoxids kann über Leitung 66 dem restlichen Teil des Sumpfprodukts aus der Säule 56, der nach Entspannung im Ventil 67 über Leitung 68 abgezogen wird, zugemischt werden. Diese Fraktion wird im Wärmetauscher 42 als zusätzliches Kältemittel eingesetzt und nach Anwärmung über Leitung 69 mit dem im Wärmetauscher 65 angewärmten Teilstrom vereinigt und dem Kohlenmonoxidverdichter 70 zugeführt. Bei einer geeigneten Druckstufe wird über Leitung 71 Kohlenmonoxid-Produkt entnommen, während der im Kreislauf zu führende Anteil über Leitung 72 abgezogen und dem Wärmetauscher 65 zugeführt wird, in dem es vor der erneuten Einspeisung in die Säule 56 abgekühlt wird.

**Patentansprüche**

1. Verfahren zur Gewinnung von Kohlenmonoxid aus einem mit Stickstoff verunreinigten, im wesentlichen Wasserstoff, Kohlenmonoxid und Methan enthaltenden Gasstrom, wobei der Gasstrom bei tiefer Temperatur unter Gewinnung einer mit Stickstoff verunreinigten Kohlenmonoxidfraktion zerlegt wird, wobei ein Teil des Kohlenmonoxids zur Deckung des Kältebedarfs des Verfahrens im Kreislauf geführt und der verbleibende Teil als Produkt abgezogen wird, dadurch gekennzeichnet, daß mit Stickstoff verunreinigtes Kohlenmonoxid durch Rektifikation in Kohlenmonoxid und eine kohlenmonoxidhaltige Stickstoff-Fraktion zerlegt wird, wobei der Sumpf einer Rektifiziersäule durch im Kreislauf geführtes Kohlenmonoxid beheizt und das im Sumpf dieser Rektifiziersäule flüssig anfallende Kohlenmonoxid nach Entspannung zur Kühlung des Kopfes der Rektifiziersäule verwendet wird.

2. Verfahren nach Anspruch 1, dadurch gekennzeichnet, daß die Beheizung des Sumpfs der Rektifiziersäule durch direkten Wärmetausch mit gasförmigem Kohlenmonoxid erfolgt.

3. Verfahren nach Anspruch 1 oder 2, dadurch gekennzeichnet, daß die Rektifikation bei einem Druck zwischen 2 und 3 bar durchgeführt wird.

4. Verfahren nach Anspruch 3, dadurch gekennzeichnet, daß das flüssige Kohlenmonoxid auf einen Druck zwischen 1 und 2 bar entspannt wird.

5. Verfahren nach einem der Ansprüche 1 bis 4, dadurch gekennzeichnet, daß die Rektifikation bei Temperaturen zwischen 80 und 93 K durchgeführt wird.

6. Verfahren nach einem der Ansprüche 1 bis 5, dadurch gekennzeichnet, daß die Rektifikationsbedingungen so aufeinander abgestimmt werden, daß am Kopf der Rektifiziersäule eine mit etwa 35 Mol-% Kohlenmonoxid verunreinigte Stickstoff-Fraktion abgezogen wird.

7. Verfahren nach einem der Ansprüche 1 bis 6, dadurch gekennzeichnet, daß der Gasstrom mit Hilfe einer Methanwäsche zerlegt wird, bei der Kohlenmonoxid, Methan und Stickstoff mit flüssigem Methan aus dem Gasstrom ausgewaschen und bei der Regenerierung der beladenen Waschflüssigkeit mit Stickstoff verunreinigtes Kohlenmonoxid gewonnen wird, wobei die Regenerierung der beladenen Waschflüssigkeit in einer Kohlenmonoxid-Methan-Trennsäule erfolgt, die am Kopf durch indirekten Wärmetausch mit flüssigem Kreislauf-Kohlenmonoxid gekühlt wird.

8. Verfahren nach Anspruch 7, dadurch gekennzeichnet, daß die Regenerierung der beladenen Waschflüssigkeit bei geringerem Druck als die Methanwäsche erfolgt und die Entspannung auf den Druck der Regenerierung in zwei Stufen durchgeführt wird, wobei nach der ersten Entspannungsstufe ausgasende Komponenten abgetrennt und als Restgas abgezogen werden.

9. Verfahren nach Anspruch 8, dadurch gekennzeichnet, daß die Abtrennung der ausgasenden Komponenten in einer Trennsäule vorgenommen wird.

10. Verfahren nach Anspruch 9, dadurch gekennzeichnet, daß die Trennsäule am Kopf mit flüssigem Kohlenmonoxid gekühlt und im Sumpf mit Methan und/oder im Kreislauf geführtem Kohlenmonoxid beheizt wird.

11. Verfahen nach einem der Ansprüche 1 bis 6, dadurch gekennzeichnet, daß der Gasstrom durch partielle Kondensation, bei der ein Kohlenmonoxid und Stickstoff enthaltendes Kondensat gebildet wird, zerlegt wird.

## Claims

1. A method for producing carbon monoxide from a gas stream which is contaminated with nitrogen and contains essentially hydrogen, carbon monoxide and methane, wherein the gas stream is separated at a low temperature with the production of a carbon monoxide fraction which is contaminated with nitrogen, wherein, in order to cover the cold requirements of the method, a part of the carbon monoxide is circulated and the remaining part is withdrawn as product, characterised in that carbon monoxide contaminated with nitrogen is separated by rectification into carbon monoxide and a nitrogen fraction which contains carbon monoxide, where the sump of a rectification column is heated by circulating carbon monoxide and the carbon monoxide which occurs in liquid form in the sump of the rectification column, is used after expansion for cooling the head of the rectification column.

2. A method as claimed in Claim 1, characterised in that the heating of the sump of the rectification column is effected by direct heat exchange with gaseous carbon monoxide.

3. A method as claimed in Claim 1 or Claim 2, characterised in that the rectification is carried out at a pressure of between 2 and 3 bar.

4. A method as claimed in Claim 3, characterised in that the liquid carbon monoxide is expanded to a pressure of between 1 to 2 bar.

5. A method as claimed in one of Claims 1 to 4, characterised in that the rectification is carried out at temperatures of between 80 and 93 K.

6. A method as claimed in one of Claims 1 to 5, characterised in that the rectification conditions are so matched to one another that a nitrogen fraction contaminated with approximately 35 mol % of carbon monoxide is withdrawn at the head of the rectification column.

7. A method as claimed in one of Claims 1 to 6, characterised in that the gas stream is separated with the aid of a methane wash in which carbon monoxide, methane and nitrogen are washed from the gas current with liquid methane, and during the regeneration of the charged wash liquid, carbon monoxide contaminated with nitrogen is obtained, the regeneration of the charged washing liquid being effected in a separating column for carbon monoxide and methane, which column is cooled at its head by indirect heat exchange with liquid circulating carbon monoxide.

8. A method as claimed in Claim 7, characterised in that the regeneration of the charged washing liquid is effected at a lower pressure than the methane wash, and the expansion to the regeneration pressure is carried out in two stages, components escaping in the form of gas being separated after the first expansion stage and withdrawn as residual gas.

9. A method as claimed in Claim 8, characterised in that the separation of the components escaping as gas is carried out in a separating column.

10. A method as claimed in Claim 9, characterised in that the separating column is cooled at its head with liquid carbon monoxide and in the sump, it is heated by means of methane and/or circulating carbon monoxide.

11. A method as claimed in one of Claims 1 to 6, characterised in that the gas stream is separated by partial condensation with the formation of a condensate containing carbon monoxide and nitrogen.

## Revendications

1. Procédé de récupération de monoxyde de carbone contenu dans un courant de gaz renfermant essentiellement de l'hydrogène, du monoxyde de carbone, du méthane et, en tant qu'impureté, de l'azote, dans lequel on fractionne ledit courant de gaz à basse température pour obtenir une fraction d'oxyde de carbone renfermant, en tant qu'impureté, de l'azote, et dans lequel on renvoie une partie du monoxyde de carbone dans le circuit afin de produire le froid requis pour la mise en œuvre du procédé, cepen-

dant que la partie restante forme le produit que l'on recueille, caractérisé en ce que le courant de monoxyde de carbone contenant en tant qu'impureté de l'azote, est séparé, par rectification, en courant de monoxyde de carbone et en une fraction d'azote renfermant du monoxyde de carbone, cependant que l'on chauffe la cuve d'une colonne de rectification à l'aide de monoxyde de carbone recirculant et que le monoxyde de carbone obtenu sous forme liquide dans la cuve de ladite colonne de rectification est utilisé pour refroidir la tête de la colonne de rectification précitée.

2. Procédé selon la revendication 1, caractérisé en ce qu'on réchauffe la cuve de la colonne de rectification par échange thermique direct avec du monoxyde de carbone gazeux.

3. Procédé selon la revendication 1 ou 2, caractérisé en ce que la rectification est effectuée sous une pression comprise entre 2 et 3 bars.

4. Procédé selon la revendication 3, caractérisé en ce que le monoxyde de carbone liquide est détendu à une pression comprise entre 1 et 2 bars.

5. Procédé selon une des revendications 1 à 4, caractérisé en ce que la rectification est effectuée à des températures comprises entre 80 et 93 °K.

6. Procédé selon une des revendications 1 à 5, caractérisé en ce qu'on accorde les conditions de rectification entre elles de façon telle qu'une fraction d'azote renfermant, en tant qu'impureté, environ 35 moles% de monoxyde de carbone soit retirée de la tête de la colonne de rectification.

7. Procédé selon une des revendications 1 à 6, caractérisé en ce que le courant gazeux est soumis à une séparation par lavage à l'aide de méthane liquide de façon telle qu'on sépare du monoxyde de carbone, du méthane et de l'azote à partir du courant gazeux, et en ce que, lors de la régénération du liquide de lavage chargé, l'on recueille du monoxyde de carbone pollué par de l'azote, cependant que la régénération de ce liquide de lavage chargé est effectuée dans une colonne de séparation de monoxyde de carbone et de méthane qui est refroidie en tête par échange thermique indirect avec du monoxyde de carbone liquide de circulation.

8. Procédé selon la revendication 7, caractérisé en ce que la régénération du liquide de lavage chargé est effectuée sous une pression inférieure à celle du lavage au méthane et en ce que la détente à la pression de régénération est effectuée en deux étapes, cependant qu'après la première étape de détente, les composants vaporisés sont séparés et retirés en tant que gaz résiduaires.

9. Procédé selon la revendication 8, caractérisé en ce que la séparation des composants vaporisés est effectuée dans une colonne de séparation.

10. Procédé selon la revendication 9, caractérisé en ce que la colonne de séparation est refroidie, en tête, à l'aide de monoxyde de carbone liquide et est chauffée, en cuve, à l'aide de méthane et/ou de monoxyde de recirculation.

11. Procédé selon une des revendications 1 à 6, caractérisé en ce que le courant gazeux est fractionné par une condensation partielle pour former un condensat renfermant du monoxyde de carbone et de l'azote.

Fig.1

0 092 770

Fig.2

0 092 770